# EUROPÄISCHE PATENTSCHRIFT

(11) **EP 1 101 032 B1**
(45) Veröffentlichungstag und Bekanntmachung des Hinweises auf die Patenterteilung: **26.05.2004**
(21) Anmeldenummer: 99938046.2
(22) Anmeldetag: 28.07.1999
(51) Int. Cl.: F02M 27/04, C02F 1/48

(54) **MAGNETISCHER AUFBEREITER**
MAGNETIC PROCESSOR
DISPOSITIF DE TRAITEMENT MAGNETIQUE

(30) Priorität: 29.07.1998 AT 130698
(43) Veröffentlichungstag der Anmeldung: 23.05.2001
(73) Patentinhaber: Öko-Spin Klemenz, Lücke und Münzing OHG, 31180 Giesen-Emmerke (DE); Münzing, Jürgen, 2640 Gloggnitz (AT)
(72) Erfinder: MÜNZING, Jürgen, A-2640 Gloggnitz (AT)
(74) Vertreter: Matschnig, Franz, Dipl.-Ing.
(86) Internationale Anmeldenummer: PCT/AT1999/000190
(87) Internationale Veröffentlichungsnummer: WO 2000/006887

(56) Entgegenhaltungen:
- EP-A- 0 277 112
- US-A- 5 626 112
- PATENT ABSTRACTS OF JAPAN vol. 12, no. 236 (M-715), 6. Juli 1988 (1988-07-06) & JP 63 029109 A (TOSHIBA), 6. Februar 1988 (1988-02-06)
- PATENT ABSTRACTS OF JAPAN vol. 1996, no. 5, 31. Mai 1996 (1996-05-31) & JP 08 001169 A (SUISEI KOGYO), 9. Januar 1996 (1996-01-09)

## Beschreibung

Die Erfindung betriff einen magnetischen Aufbereiter für Flüssigkeiten, insbesondere für fluide Brennstoffe, mit einem Gehäuse und zumindest einem Magneteinsatz, der einen Magnet und einen Durchflußweg für eine Flüssigkeit aufweist, wobei ein Durchlaßquerschnitt in Abhängigkeit von dem Strömungsdruck der Flüssigkeit veränderlich ist.

Aus der US 4 611 615A ist ein rohrförmiger Aufbereiter für die Behandlung von flüssigen Erdölprodukten bekannt geworden, der insbesondere dazu dienen soll, Paraffin- und andere Ablagerungen an Rohrwandungen zu vermeiden. Aus diesem Dokument geht die Verwendung von Magneten im Zusammenhang mit verwirbelten Flüssigkeitsbereichen als bekannt hervor.

Ein Aufbereiter der eingangs genannten Art geht aus der EP-A 0 277 112 des Anmelders hervor und stellt insofern eine Weiterentwicklung dar, als der dort beschriebene bewegliche Magneteinsatz eine Anpassung an unterschiedliche Durchflußmengen ermöglicht und sowohl bei sehr geringen als auch bei größeren Durchflußmengen die gewünschten Resultate liefert.

Eine Aufgabe der Erfindung liegt darin, die Vorteile der dem Stand der Technik entsprechenden magnetischen Aufbereiter derart zu kombinieren, daß einerseits weiterhin einfache Bauformen und Bauteile eingesetzt werden können und andererseits auch eine Anpassung an unterschiedliche Durchflußmengen möglich ist.

Diese Aufgabe wird mit einem magnetischen Aufbereiter der eingangs erwähnten Art dadurch gelöst, daß der Magneteinsatz einen nicht magnetisierbaren Außenteil aufweist, in welchem eine bewegbare magnetisierbare Kugel so untergebracht ist, daß der Durchlaßquerschnitt durch die Kugel und einem dieser zugeordneten Sitz auf dem Magneten definiert ist, wobei die Kugel einer Kraftwirkung zumindest des Magneten und des Strömungsdruckes unterliegt.

Ein magnetischer Aufbereiter nach der Erfindung weist einen sehr einfachen Aufbau auf und ist aufgrund seiner Funktionsweise unabhängig von seiner Einbaulage, wobei er weiterhin die Vorteile eines der Durchflußmenge anpaßbaren Strömungsquerschnitts aufweist. Außerdem ist ein erfindungsgemäßer magnetischer Aufbereiter sehr einfach, kostengünstig und mit unterschiedlichsten Abmessungen herstellbar.

Es ist meist von Vorteil, wenn der Sitz zumindest weitgehend dichtend ausgebildet ist, um auch bei relativ geringen Durchflußmengen einen für die Änderung des Durchlaßquerschnitts ausreichenden Flüssigkeitsdruck auf die Kugel auszuüben. Für das gleiche Ziel kann die Kugel durch eine Feder mit einer Kraft beaufschlagt sein, durch welche die Kraft des Magneten auf die Kugel in deren Anschlagposition auf dem Sitz weitgehend ausgeglichen ist.

Wenn der Magnet eine Lochscheibenform, Ringform oder Rohrform aufweist, kann der Magneteinsatz gegebenenfalls aus wenigen, leicht verfügbaren Teilen zusammengesetzt werden.

Besonders einfach zu realisieren ist ein magnetischer Aufbereiter nach der Erfindung, wenn die ist Kugel weichmagnetisch ist und daher die Kraftwirkung des Magneten von ihrer räumlichen Lage unabhängig ist.

Um bei Bedarf die Bewegbarkeit der Kugel innerhalb des Magneteinsatzes zu beschränken, können ein die Bewegung der Kugel in Strömungsrichtung begrenzender Anschlag vorgesehen sein. Gleichfalls können Führungselemente eingerichtet sein, welche die Bewegung der Kugel seitlich begrenzen.

Ein definierter Durchflußweg durch den Magneteinsatz ist sehr leicht zu realisieren, wenn stromab der Kugel eine oder mehrere Ausströmöfänungen vorgesehen sind, welche als Löcher in einer Deckplatte des Magneteinsatzes ausgebildet sind.

Vorteilhaft kann es dabei auch sein, wenn der Anschlag als Rand einer zentralen Ausströmöffnung ausgebildet ist, weil auf diese Weise ein stabile Lage der Kugel in der oberen Anschlagposition erreichbar ist.

Außerdem ist es zum Zwecke der Bauteilersparnis günstig, wenn die Deckplatte mit dem Außenteil einstückig ausgebildet ist.

Wenn der Außenteil aus Aluminium besteht, kann ein leichter, mit vielen Flüssigkeiten verträglicher Magneteinsatz bereitgestellt werden.

In einer bevorzugten Ausführungsform weist der Magneteinsatz eine im wesentlichen zylindrische Form auf Er kann daher leicht in ein entsprechendes Gehäuse eingebaut werden.

Um eine effektivere Aufbereitung der Flüssigkeit zu erlangen, können mehrere Magneteinsätze vorgesehen sein, welche in dem Gehäuse eingebaut sind und einen oder mehrere Durchflußwege bilden.

Zweckgemäß kann ein erfindungsgemäßer magnetischer Aufbereiter sein, bei dem Magneteinsätze in paralleler Anordnung mehrere Durchflußwege bilden. Entsprechend können Magneteinsätze in Reihenanordnung einen Durchflußweg bilden, wobei es günstig ist, zwischen benachbarten Magneteinsätzen je einen Dichtring vorzusehen. Durch diese Variationsmöglichkeiten ermöglicht es die Erfindung, magnetische Aufbereiter hinsichtlich des Querschnitts und der Durchflußmenge in großer Vielfalt und auf kostengünstige Weise herzustellen, indem einfache, gleichartige Magneteinsätze als modulare Bausteine im Strömungsweg eingerichtet sind.

Der Magnet kann im einfachsten Fall in axialer Richtung magnetisiert sein, bei mehreren Magneteinsätzen können die Magnete in Durchflußrichtung abwechselnd polarisiert sein. Die unterschiedliche Gestaltung des Magnetfeldes kann sich als vorteilhaft erweisen, beispielsweise für die Aufbereitung verschiedener Flüssigkeiten oder einer Flüssigkeit in verschiedenen Strömungszuständen.

Das Gehäuse kann zum Zwecke einer kompakteren Ausführung des magnetischen Aufbereiters im wesentlichen rotationssymmetrisch ausgebildet sein. Eine leichtere Montage wird erreicht, wenn das Gehäuse im wesentlichen aus zwei miteinander verbindbaren Teilen besteht.

Im folgenden wird eine Ausführungsform der Erfindung anhand der beigefügten Zeichnung genauer beschrieben, wobei einzelne Figuren folgendes zeigen:
Fig. 1 einen Schnitt entlang einem Durchmesser eines erfindungsgemäßen Magneteinsatzes;
Fig. 2 eine Unteransicht des Magneteinsatzes der Fig. 1;
Fig. 3 eine Draufsicht auf den Magneteinsatz der Fig. 1;
Fig. 4 eine Serienkombination von mehreren gleichen Magneteinsätzen gemäß der Fig. 1;
Fig. 5 eine Parallelkombination von mehreren gleichen Magneteinsätzen gemäß der Fig. 1;
Fig. 6 eine Draufsicht auf eine Anordnung von erfindungsgemäßen Magneteinsätzen;
Fig. 7 einen Querschnitt eines erfindungsgemäßen Gehäuseteils mit einem Magneteinsatz;
Fig. 8 einen Querschnitt eines zu dem Gehäuseteil der Fig. 7 passenden Verschlußteils;

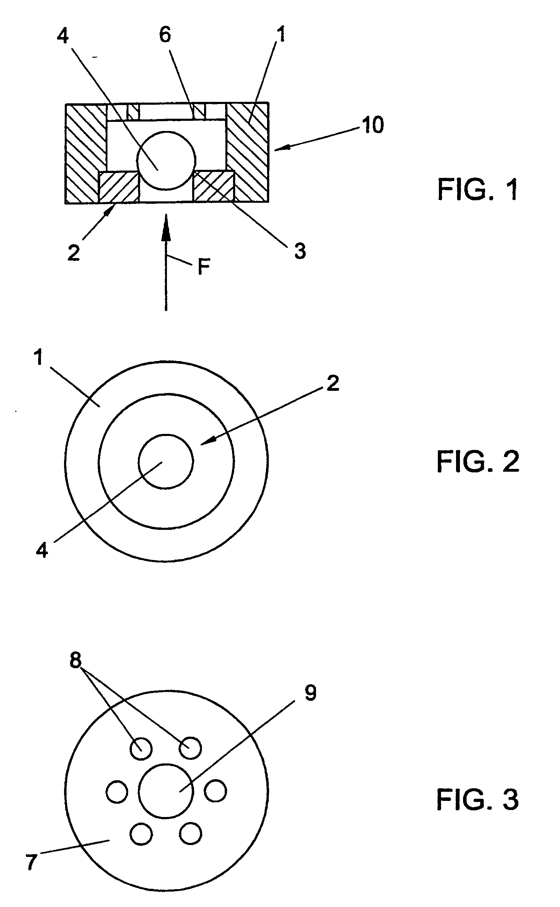

Wie in Fig. 1 gezeigt, weist ein Magneteinsatz 10 im wesentlichen drei Funktionsteile, nämlich einen Außenteil 1, einen Magnet 2 und eine bewegbare weichmagnetische Kugel 4 auf Dabei ist der Magnet 2 ein Dauermagnet weist eine Ringform auf, ist axial magnetisiert und bildet einen im wesentlichen dichtenden Sitz 3 für die Kugel 4, auf welche er eine anziehende magnetische Kraft ausübt. Der Außenteil 1 ist im wesentlichen zylindrisch und umgibt den Magnet 2 konzentrisch, wie es in Fig. 2 gezeigt ist, und umschließt die Kugel 4 so, daß ein Durchflußweg für eine Flüssigkeit in der durch einen Pfeil F angezeigten Richtung ausgebildet ist, wenn die Kugel 4 durch den Flüssigkeitsdruck von dem Sitz 3 abgehoben ist. Dabei strömt die Flüssigkeit durch den Magnetring 2, zwischen der Kugel 4 und dem zugehörigen Sitz 3 hindurch und dann durch Ausströmöffnungen 8 hinaus. Die Ausströmöffnungen 8 sind der Einfachheit halber als Bohrungen in einer Deckplatte 7 des Außenteils 1 realisiert, welche wiederum einstückig, wie gezeigt, mit dem Außenteil 1 ausgeführt sein kann.

Wie es in Fig. 3 besser sichtbar ist, weist die Deckplatte 7 neben außermittigen Ausströmöffnungen 8 auch eine zentrale Bohrung 9 auf Erstere sind dabei gleichmäßig an einem Umfang um letztere verteilt, beispielsweise um eine symmetrischen Durchströmung des Magneteinsatzes 10 zu begünstigen, und ihre Anzahl und Durchmesser sind ebenfalls auf eine gewünschte Durchströmung abgestimmt. Der Durchmesser der zentralen Bohrung 9 ist auf die Größe der Kugel 4 abgestimmt, weil ihr Rand als Anschlag 6 für diese dient, wenn ein starker Strömungsdruck der Flüssigkeit die Kugel 4 von dem Sitz 3 ablöst und bis zur Deckplatte 7 anhebt. Dadurch befindet sich die Kugel 4 auch diesem Falle in einer definierten stabilen Position. Der Weg der Kugel 4 zwischen den vorgesehenen Anschlagpositionen auf dem Sitz 3 bzw. der Bohrung 9 kann außerdem durch nicht dargestellte Führungselemente vorbestimmt werden, um weitere stabile Lagen der Kugel 4 auszuschließen. Dadurch kann ein magnetischer Aufbereiter in einer Flüssigkeitsleitung in jeder beliebigen Lage eingebaut werden.

Besondere Vorteile eines magnetischen Aufbereiters mit einem in Fig. 1 bis 3 gezeigten Magneteinsatz 10 ergeben sich daraus, daß die größten Strömungsgeschwindigkeiten in einem Bereich großer Magnetfeldstärke auftreten, wie es für eine magnetische Behandlung einer Flüssigkeit, beispielsweise Brennstoff oder Wasser, förderlich ist. Dieser Bereich erstreckt sich im wesentlichen um jenen Durchlaßquerschnitt, der durch die Kugel 4 und den Sitz 3 definiert ist. Die durch die Kugel 4 durchtretenden Feldlinien des axial magnetisierten, ringförmigen Magneten 2, weisen nämlich im Abschnitt zwischen diesen beiden magnetisierbaren Körpern, d. h. eben im Bereich des erwähnten Durchlaßquerschnitts, eine relativ hohe Feldstärke auf. Dieser Durchlaßquerschnitt ist in Abhängigkeit von dem Strömungsdruck der Flüssigkeit veränderlich, wie es für einen magnetischen Flüssigkeitsaufbereiter erwünscht ist, um eine entsprechende Anpassung an unterschiedliche Durchflußmengen zu ermöglichen.

Die beschriebene Ausführung des Magneteinsatzes 10 kann nach Wunsch in mehrerer Hinsicht abgeändert werden. Beispielsweise kann der Magnet 2 eine von der Ringform abweichende lochscheibenähnliche oder rohrähnliche Gestalt aufweisen. Dadurch können unterschiedliche. Kraft/Wegverhältnisse für die magnetisierbare Kugel 4 erreicht werden, was wiederum für ein der jeweiligen Anwendung angepaßtes Durchlaßverhalten eines erfindungsgemäßen magnetischen Aufbereiters sorgen kann. Obwohl bei magnetischen Aufbereitern, wie bei der beschriebenen Ausführung, meist Dauermagnete verwendet werden, weil sie keine elektrische Energie verbrauchen, ist auch der Einsatz von Elektromagneten vorgesehen, um bei Bedarf einen regelbaren magnetischen Aufbereiter zu erhalten. Auch kann beispielsweise der Sitz 3 als eigenes, auf dem Magneten 2 angebrachtes Bauelement ausgeführt sein, wenn ein direkter Kontakt des Magneten 2 mit der Kugel 4 vermieden werden soll, beispielsweise um gegebenenfalls auftretende Hafteffekte zu vermeiden. Dies kann bei Anwendungen mit besonders hohen Anforderungen hinsichtlich der Konstanz des Betriebsverhaltens oder der Lebensdauer des magnetischen Aufbereiters nach der Erfindung empfehlenswert sein. Weiters ist es durch zusätzliche konstruktive Maßnahmen möglicherweise notwendig, einen direkten Kontakt des Magneten 2 mit der aufzubereitenden Flüssigkeit zu vermeiden, insbesondere wenn ein zwar hochwertiger, aber in Kombination mit der verwendeten Flüssigkeit korrosionsbehafteter Magnetwerkstoff verwendet wird. Dies kann beispielsweise durch einen nicht dargestellten, wie der Außenteil 1 ebenfalls aus nicht magnetisierbarem Material bestehenden Innenteil erreicht werden, welcher den Magnet 2 von der Flüssigkeit isoliert und außerdem den erforderlichen Durchflußweg bildet.

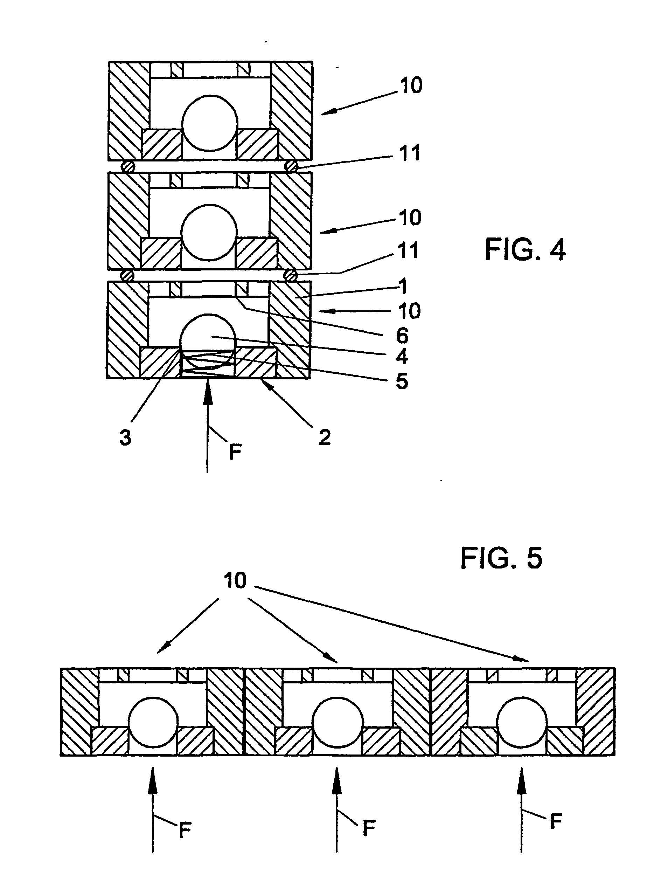

Eine weitere Variante eines magnetischen Aufbereiters nach der Erfindung ist durch eine in Fig. 4 gezeigte Serienanordnung von drei Magneteinsätzen 10 der oben beschriebenen Art vorgesehen. Bei dieser wird ein insgesamt längerer Durchflußweg der Flüssigkeit durch Magnetfeldbereiche geschaffen, wobei zwischen den einzelnen Magneteinsätzen 10 vorteilhafterweise Dichtungsringe 11 vorgesehen sind. Alternativ zu den Dichtungsringen 11 können auch O-Ringe eingesetzt werden. Ein zusätzliches Federelement 5 ist in dem ersten Magneteinsatz 10 eingerichtet, welches die Kugel 4 mit einer Kraft beaufschlagt, durch welche die Kraft des Magneten 2 auf die Kugel 4 in deren Anschlagposition auf dem Sitz 3 weitgehend ausgeglichen wird. Dadurch wird der Fall vermieden, daß die magnetischen Kräfte auf die einzelnen Kugeln 4 von der Kraft des verfügbaren Strömungsdrucks nicht überwunden werden, eine beabsichtigte Änderung des Durchlaßquerschnitts oder zumindest überhaupt ein Durchfluß gewährleistet. Selbstverständlich können auch mehrere oder alle Magneteinsätze 10 mit einem wie beschrieben funktionierenden Federelement 5 versehen sein, beispielsweise wenn in einer Kraftstoftzuführungsleitung mit begrenztem Strömungsdruck zur Verbesserung der aufbereitenden Wirkung nachträglich zusätzliche Magneteinsätze 10 eingefügt werden.

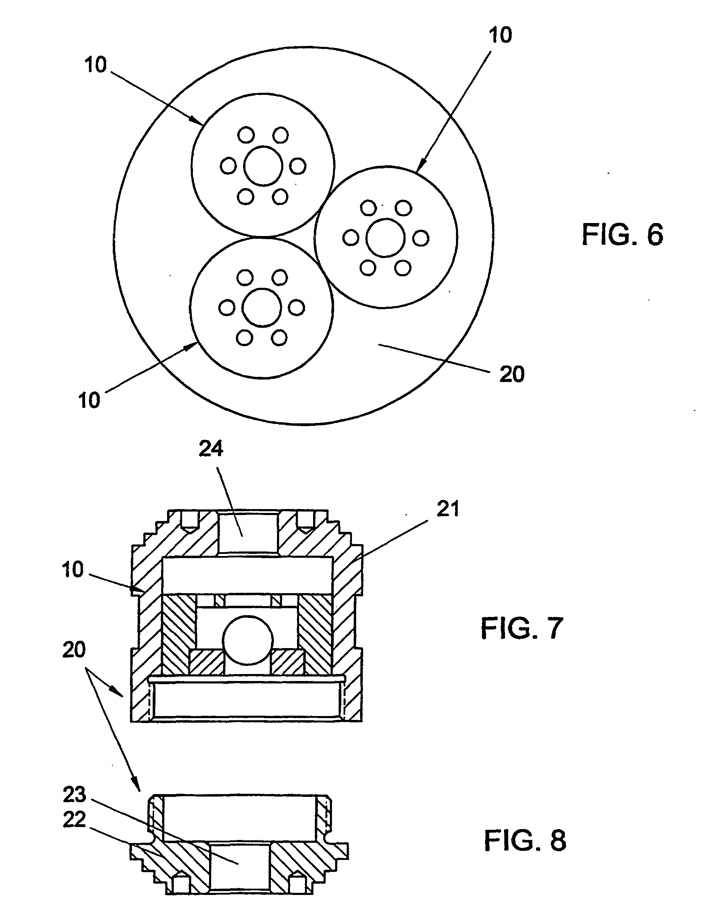

Wie in Fig. 5 gezeigt, ist eine parallele Anordnung von mehreren, beispielsweise drei Magneteinsätzen 10 ebenfalls vorgesehen, insbesondere wenn aus gleichartigen, in großer Zahl verfügbaren Magneteinsätzen 10 ein magnetischer Aufbereiter mit einem größerer Gesamtdurchflußquerschnitt gebaut werden soll. Wie in Fig. 6 gezeigt, sind parallele Durchflußwege bildende Magneteinsätze 10 leicht in einem Gehäuse 20 mit einem Rundquerschnitt unterzubringen. Die einzelnen Durchflußwege selbst können auch aus mehreren hintereinander angeordneten Magneteinsätzen 10, wie in Fig. 4 dargestellt, gebildet sein.

Eine bevorzugte Ausführung der Erfindung, welche einen wie oben beschriebenen Magneteinsatz 10 enthält, weist ein zylindrisches Gehäuseteil 21, gezeigt in Fig. 7, mit einem Verbindungsanschluß 24 für den Abfluß und ein Gehäuseteil 22, gezeigt in Fig. 8, mit einem Verbindungsanschluß 23 für den Zustrom der aufzubereitenden Flüssigkeit auf Die beiden Gehäuseteile 21, 22 sind miteinander verschraubbar, um eine leichtere Austauschbarkeit des Magneteinsatzes 10 zu ermöglichen. Sie sind im einfachsten Fall zusammensteckbar und ermöglichen beispielsweise auch einen Wechsel zwischen den beschriebenen konstruktiven Varianten von Magneteinsätzen 10. Das kann in der Praxis zur kostengünstigen Anpassung eines magnetischen Aufbereiters an geänderte Durchflußmengen oder Flüssigkeitseigenschaften ausgenutzt werden. Die Erfindung begünstigt also die besonders vorteilhafte Realisierung von magnetischen Aufbereitern in Baureihen.

Durch die wie beschriebene unmittelbare Anpaßbarkeit der Erfindung auf gewünschte Durchflußmengen oder intensivere Behandlung der jeweiligen Flüssigkeit, insbesondere eines Brennstoffs, wird eine Verwendung der vorliegenden Erfindung gegenüber magnetischen Aufbereitem gemäß dem Stand der Technik in den meisten Fällen bevorzugt sein.

## Patentansprüche

1. Magnetischer Aufbereiter für Flüssigkeiten, insbesondere fiir-fluide Brennstoffe, mit einem Gehäuse (20) und zumindest einem Magneteinsatz (10), der einen Magnet (2) und einen Durchflußweg für eine Flüssigkeit aufweist, wobei ein Durchlaßquerschnitt in Abhängigkeit von dem Strömungsdruck der Flüssigkeit veränderlich ist,
**dadurch gekennzeichnet, daß**
der Magneteinsatz einen nicht magnetisierbaren Außenteil (1) aufweist, in welchem eine bewegbare magnetisierbare Kugel (4) so untergebracht ist, daß der Durchlaßquerschnitt durch die Kugel (4) und einem dieser zugeordneten Sitz (3) auf dem Magneten (2) definiert ist, wobei die Kugel (4) einer Kraftwirkung zumindest des Magneten (2) und des Strömungsdruckes unterliegt.

2. Magnetischer Aufbereiter nach Anspruch **1, dadurch gekennzeichnet, daß** der Sitz (3) zumindest weitgehend dichtend ausgebildet ist.

3. Magnetischer Aufbereiter nach Anspruch 1 oder 2, **dadurch gekennzeichnet, daß** die Kugel (4) durch eine Feder (5) mit einer Kraft beaufschlagt ist, durch welche die Kraft des Magneten (2) auf die Kugel (4) in deren Anschlagposition auf dem Sitz (3) weitgehend ausgeglichen ist.

4. Magnetischer Aufbereiter nach einem der Ansprüche 1 bis 3, **dadurch gekennzeichnet, daß** der Magnet (2) eine Lochscheibenform, Ringform oder Rohrform aufweist.

5. Magnetischer Aufbereiter nach einem der Ansprüche 1 bis 4, **dadurch gekennzeichnet, daß** die Kugel (4) weichmagnetisch ist.

6. Magnetischer Aufbereiter nach einem der Ansprüche 1 bis 5, **dadurch gekennzeichnet, daß** ein die Bewegung der Kugel (4) in Strömungsrichtung begrenzender Anschlag (6) vorgesehen ist.

7. Magnetischer Aufbereiter nach einem der Ansprüche 1 bis 6, **dadurch gekennzeichnet, daß** Führungselemente eingerichtet sind, welche die Bewegung der Kugel seitlich begrenzen.

8. Magnetischer Aufbereiter nach einem der Ansprüche 1 bis 7, **dadurch gekennzeichnet, daß** stromab der Kugel (4) eine oder mehrere Ausströmöffnungen (8) vorgesehen sind, welche als Löcher in einer Deckplatte (7) des Magneteinsatzes (10) ausgebildet sind.

9. Magnetischer Aufbereiter nach Anspruch 6 und 8, **dadurch gekennzeichnet, daß** der Anschlag (6) als Rand einer zentralen Ausströmöffnung (9) ausgebildet ist.

10. Magnetischer Aufbereiter nach Anspruch 8 oder 9, **dadurch gekennzeichnet, daß** die Deckplatte (7) mit dem Außenteil (1) einstückig ausgebildet ist.

11. Magnetischer Aufbereiter nach einem der Ansprüche 1 bis 10, **dadurch gekennzeichnet, daß** der Außenteil (1) aus Aluminium besteht.

12. Magnetischer Aufbereiter nach einem der Ansprüche 1 bis 11, **dadurch gekennzeichnet, daß** der Magneteinsatz (10) eine im wesentlichen zylindrische Form aufweist.

13. Magnetischer Aufbereiter nach einem der Ansprüche 1 bis 12, **dadurch gekennzeichnet, daß** mehrere Magneteinsätze (10) vorgesehen sind, welche in dem Gehäuse (20) eingebaut sind und einen oder mehrere Durchflußwege bilden.

14. Magnetischer Aufbereiter nach Anspruch 13, **dadurch gekennzeichnet, daß** Magneteinsätze (10) in paralleler Anordnung mehrere Durchflußwege bilden.

15. Magnetischer Aufbereiter nach Anspruch 13 oder 14, **dadurch gekennzeichnet, daß** Magneteinsätze (10) in Reihenanordnung einen Durchflußweg bilden.

16. Magnetischer Aufbereiter nach Anspruch 15, **dadurch gekennzeiclmet, daß** zwischen benachbarten Magneteinsätzen (10) je ein Dichtring (11) vorgesehen ist.

17. Magnetischer Aufbereiter nach einem der Ansprüche 1 bis 16, **dadurch gekennzeichnet, daß** der Magnet (2) in axialer Richtung magnetisiert ist.

18. Magnetischer Aufbereiter nach einem der Ansprüche 13 bis 17, **dadurch gekennzeichnet, daß** die Magnete (2) in Durchflußrichtung abwechselnd polarisiert sind.

19. Magnetischer Aufbereiter nach einem der Ansprüche 1 bis 18, **dadurch gekennzeichnet, daß** das Gehäuse (20) im wesentlichen rotationssymmetrisch ist.

20. Magnetischer Aufbereiter nach einem der Ansprüche 1 bis 19, **dadurch gekennzeichnet, daß** das Gehäuse (20) im wesentlichen aus zwei miteinander verbindbaren Teilen (21, 22) besteht.

## Claims

1. A magnetic processor for liquids, particularly for fluid fuels, having a housing (20) and at least one magnetic insert (10) comprising a magnet (2) and a flowpath for a liquid, in which the flow area is variable depending on the pressure head of the liquid, **characterized in that** the magnetic insert has a non-magnetizable outer part (1), in which a movable magnetizable ball (4) is accommodated such that the flow area is defined by said ball (4) and its associated seat (3) on the magnet (2), which ball (4) is subjected to a force effect derived from at least the magnet (2) and the pressure head.

2. A magnetic processor as defined in claim 1, **characterized in that** the seat (3) forms at least substantially a sealing fit.

3. A magnetic processor as defined in claim 1 or claim 2, **characterized in that** the ball (4) is subjected to the action of a force by means of a spring (5), which force substantially counterbalances the force of the magnet (2) on the ball (4) in its resting position on the seat (3).

4. A magnetic processor as defined in any one of claims 1 to 3, **characterized in that** the magnet (2) is in the form of a perforated plate or is annular or tubular in shape.

5. A magnetic processor as defined in any one of claims 1 to 4, **characterized in that** the ball (4) is of soft magnetic material.

6. A magnetic processor as defined in any one of claims 1 to 5, **characterized in that** a stop member (6) for restricting the movement of the ball (4) in the direction of flow is provided.

7. A magnetic processor as defined in any one of claims 1 to 6, **characterized in that** guide elements are installed which restrict the lateral movement of the ball.

8. A magnetic processor as defined in any one of claims 1 to 7, **characterized in that** downstream of the ball (4) one or more outlet openings (8) are provided which are in the form of holes in a coverplate (7) of the magnetic insert (10).

9. A magnetic processor as defined in claim 6 and 8, **characterized in that** the stop member (6) is in the form of an edge of a central outlet opening (9).

10. A magnetic processor as defined in claim 8 or claim 9, **characterized in that** the coverplate (7) forms an integral part of the outer part (1).

11. A magnetic processor as defined in any one of claims 1 to 10, **characterized in that** the outer part (1) is of aluminum.

12. A magnetic processor as defined in any one of claims 1 to 11, **characterized in that** the magnetic insert (10) has a substantially cylindrical shape.

13. A magnetic processor as defined in any one of claims 1 to 12, **characterized in that** a plurality of magnetic inserts (10) is provided which are installed in the housing (20) and form one or more flowpaths.

14. A magnetic processor as defined in claim 13, **characterized in that** magnetic inserts (10) disposed in a parallel arrangement form a number of flowpaths.

15. A magnetic processor as defined in claim 13 or claim 14, **characterized in that** magnetic inserts (10) disposed in a series arrangement form a single flow path.

16. A magnetic processor as defined in claim 15, **characterized in that** a gasket ring (11) is provided between adjacent magnetic inserts (10).

17. A magnetic processor as defined in any one of claims 1 to 16, **characterized in that** the magnet (2) is magnetized in the axial direction.

18. A magnetic processor as defined in any one of claims 13 to 17, **characterized in that** the magnets (2) are alternately polarized in the direction of flow.

19. A magnetic processor as defined in any one of claims 1 to 18, **characterized in that** the housing (20) is substantially axially symmetrical.

20. A magnetic processor as defined in any one of claims 1 to 19, **characterized in that** the housing (20) consists substantially of two interconnectable parts (21, 22).

## Revendications

1. Dispositif de traitement magnétique pour des liquides, en particulier pour des combustibles liquides, avec un boîtier (20) et au moins une garniture magnétique (10), qui présente un aimant (2) et une voie de passage pour un liquide, dans lequel une section de passage est variable en fonction de la pression d'écoulement du liquide, **caractérisé en ce que** la garniture magnétique présente une partie extérieure non magnétisable (1), dans laquelle une bille magnétique mobile (4) est installée de telle façon que la section de passage soit définie par la bille (4) et par un siège (3) associé à celle-ci sur l'aimant (2), dans lequel la bille (4) est soumise à l'action de la force au moins de l'aimant (2) et de la pression d'écoulement.

2. Dispositif de traitement magnétique selon la revendication 1, **caractérisé en ce que** le siège (3) est configuré de façon au moins largement étanche.

3. Dispositif de traitement magnétique selon la revendication 1 ou 2, **caractérisé en ce que** la bille (4) est soumise par un ressort (5) à une force par laquelle la force de l'aimant (2) sur la bille (4) dans sa position de butée sur le siège (3) est largement compensée.

4. Dispositif de traitement magnétique selon l'une quelconque des revendications 1 à 3, **caractérisé en ce que** l'aimant (2) présente la forme d'un disque perforé, d'un anneau ou d'un tube.

5. Dispositif de traitement magnétique selon l'une quelconque des revendications 1 à 4, **caractérisé en ce que** la bille (4) est magnétique douce.

6. Dispositif de traitement magnétique selon l'une quelconque des revendications 1 à 5, **caractérisé en ce qu'**il est prévu une butée (6) limitant le mouvement de la bille (4) dans le sens de l'écoulement.

7. Dispositif de traitement magnétique selon l'une quelconque des revendications 1 à 6, **caractérisé en ce qu'**il comporte des éléments de guidage, qui limitent latéralement le mouvement de la bille.

8. Dispositif de traitement magnétique selon l'une quelconque des revendications 1 à 7, **caractérisé en ce qu'**il est prévu en aval de la bille (4) une ou plusieurs ouvertures d'échappement (8), qui se présentent sous la forme de trous dans une plaque de couvercle (7) de la garniture magnétique (10).

9. Dispositif de traitement magnétique selon la revendication 6 ou 8, **caractérisé en ce que** la butée (6) se présente sous la forme d'un bord d'une ouverture centrale d'échappement (9).

10. Dispositif de traitement magnétique selon la revendication 8 ou 9, **caractérisé en ce que** la plaque de couvercle (7) est formée d'une seule pièce avec la partie extérieure (1).

11. Dispositif de traitement magnétique selon l'une quelconque des revendications 1 à 10, **caractérisé en ce que** la partie extérieure (1) est constituée d'aluminium.

12. Dispositif de traitement magnétique selon l'une quelconque des revendications 1 à 11, **caractérisé en ce que** la garniture magnétique (10) présente une forme sensiblement cylindrique.

13. Dispositif de traitement magnétique selon l'une quelconque des revendications 1 à 12, **caractérisé en ce qu'**il est prévu plusieurs garnitures magnétiques (10), qui sont incorporées dans le boîtier (20) et qui forment une ou plusieurs voies de passage.

14. Dispositif de traitement magnétique selon la revendication 13, **caractérisé en ce que**,des garnitures magnétiques (10) disposées en parallèle forment plusieurs voies de passage.

15. Dispositif de traitement magnétique selon la revendication 13 ou 14, **caractérisé en ce que** des garnitures magnétiques (10) disposées en série forment une voie de passage.

16. Dispositif de traitement magnétique selon la revendication 15, **caractérisé en ce qu'**il est chaque fois prévu un joint annulaire (11) entre des garnitures magnétiques (10) voisines.

17. Dispositif de traitement magnétique selon l'une quelconque des revendications 1 à 16, **caractérisé en ce que** l'aimant (2) est aimanté en direction axiale.

18. Dispositif de traitement magnétique selon l'une quelconque des revendications 13 à 17, **caractérisé en ce que** les aimants (2) sont polarisés en alternance dans le sens de l'écoulement.

19. Dispositif de traitement magnétique selon l'une quelconque des revendications 1 à 18, **caractérisé en ce que** le boîtier (20) présente sensiblement la symétrie de révolution.

20. Dispositif de traitement magnétique selon l'une quelconque des revendications 1 à 19, **caractérisé en ce que** le boîtier (20) se compose d'au moins deux parties (21, 22) pouvant être assemblées l'une à l'autre.
